# EUROPEAN PATENT SPECIFICATION

(11) **EP 3 172 959 B1**
(45) Date of publication and mention of the grant of the patent: **12.09.2018**
(21) Application number: 15196805.4
(22) Date of filing: 27.11.2015
(51) Int. Cl.: A01F 12/40, A01F 29/00, A01D 41/12, A01F 29/06

(54) **CHOPPER AND SPREADER FOR AN AGRICULTURAL HARVESTER**
HÄCKSLER UND STREUER FÜR EINE LANDWIRTSCHAFTLICHE ERNTEMASCHINE
HACHEUR ET ÉCARTEUR POUR UNE MOISSONNEUSE AGRICOLE

(43) Date of publication of application: 31.05.2017
(73) Proprietor: CNH Industrial Belgium nv, 8210 Zedelgem (BE)
(72) Inventor: Ballegeer, Stefaan, 8730 Beernem (BE); Duquesne, Frank R. G., 8550 Zwevegem (BE); Isaac, Nathan E., Lancaster, Pennsylvania 17601 (US); Meurisse, Joachim, 8870 Izegem (BE); Baes, Frederik, 8647 Reninge (BE); Dilts, Mark D., New Holland, Pennsylvania 17557 (US)
(74) Representative: CNH Industrial IP Department

(56) References cited:
- EP-A1- 0 631 717
- EP-A1- 1 269 822
- EP-A1- 1 897 430
- WO-A1-02/34029
- WO-A1-2014/180911
- DE-A1- 4 218 235
- US-A1- 2009 156 277

## Description

### BACKGROUND OF THE INVENTION

The present invention relates to agricultural harvesters, and, more specifically to a chopper and spreader configuration.

An agricultural harvester known as a "combine" is historically termed such because it combines multiple harvesting functions with a single harvesting unit, such as picking, threshing, separating and cleaning. A combine includes a header which removes the crop from a field, and a feeder housing which transports the crop matter into a threshing rotor. The threshing rotor rotates within a perforated housing, which may be in the form of adjustable concaves and performs a threshing operation on the crop to remove the grain. Once the grain is threshed it falls through perforations in the concaves onto a grain pan. From the grain pan the grain is cleaned using a cleaning system, and is then transported to a grain tank onboard the combine. A cleaning fan blows air through the sieves to discharge chaff and other debris toward the rear of the combine. Non-grain crop material such as straw from the threshing section proceeds through a residue system, which may utilize a straw chopper to process the non-grain material and direct it out the rear of the combine. When the grain tank becomes full, the combine is positioned adjacent a vehicle into which the grain is to be unloaded, such as a semi-trailer, gravity box, straight truck, or the like; and an unloading system on the combine is actuated to transfer the grain into the vehicle.

More particularly, a rotary threshing or separating system includes one or more rotors which can extend axially (front to rear) or transversely within the body of the combine, and which are partially or fully surrounded by a perforated concave. The crop material is threshed and separated by the rotation of the rotor within the concave. Coarser non-grain crop material such as stalks and leaves are transported to the rear of the combine and discharged back to the field. The separated grain, together with some finer non-grain crop material such as chaff, dust, straw, and other crop residue are discharged through the concaves and fall onto a grain pan where they are transported to a cleaning system. Alternatively, the grain and finer non-grain crop material may also fall directly onto the cleaning system itself.

A cleaning system further separates the grain from non-grain crop material, and typically includes a fan directing an airflow stream upwardly and rearwardly through vertically arranged sieves which oscillate in a fore and aft manner. The airflow stream lifts and carries the lighter non-grain crop material towards the rear end of the combine for discharge to the field. Clean grain, being heavier, and larger pieces of non-grain crop material, which are not carried away by the airflow stream, fall onto a surface of an upper sieve (also known as a chaffer sieve) where some or all of the clean grain passes through to a lower sieve (also known as a cleaning sieve). Grain and non-grain crop material remaining on the upper and lower sieves are physically separated by the reciprocating action of the sieves as the material moves rearwardly. Any grain and/or non-grain crop material remaining on the top surface of the upper sieve are discharged at the rear of the combine. Grain falling through the lower sieve lands on a bottom pan of the cleaning system, where it is conveyed forwardly toward a clean grain auger.

The clean grain auger conveys the grain to a grain tank for temporary storage. The grain accumulates to the point where the grain tank is full and is discharged to an adjacent vehicle such as a semi trailer, gravity box, straight truck or the like by an unloading system on the combine that is actuated to transfer grain into the vehicle.

The separating system directs the non-grain material toward a residue system that processes and/or spreads the residue upon the field.

The prior art traditional hood mount chopper is heavy and the mass is suspended a significant distance rearward from the steering (rear) axle of the combine. This increases the load on the rear axle when evaluating an overall vehicle weight/balance on 2 or more axles in order to meet on-road transportation requirements. Because of the substantial rearward placement of the chopper, assistive devices are often required to help transport the material from the discharge beater to the chopper. These devices may include a conveyor belt or additional beaters. A lighter weight solution is desirable. EP0631717 discloses a mounted chopper for discharge of a straw/chaff mixture for a combine harvester with a spreader assigned to the straw chopper.

What is needed in the art is a residue handling system that reduces or eliminates the need for flow assistive devices and reduces the overall weight of the harvester.

### SUMMARY OF THE INVENTION

The present invention provides a close association of the chopper with the spreader, yet accommodates the flow of residue when in a windrow mode.

The invention in one form is directed to an agricultural harvester including a chassis, with a separating system and a residue handling system each carried by the chassis. The separating system produces a chaff flow and a residue flow. The residue handling system includes a residue chopper operationally positioned immediately above a residue spreader.

An advantage of the present invention is that the chopper, when in a chopper mode, directs the chopped residue directly into the spreader.

Another advantage is that when the residue handling system is in the windrow mode the flow of the residue is assisted by the chopper movement.

Yet another advantage is that the chopper may change speed and/or direction of rotation depending on whether the door is in the windrow mode or the chopping mode.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a side view of an embodiment of an agricultural harvester in the form of a combine illustrating the residue handling system of the present invention in a cutout view toward the rear of the harvester;
Fig. 2 is a rear perspective view of some of the components of the harvester of Fig. 1 showing further details of the present invention;
Fig. 3 is a side cutaway view of the residue handling system of Figs. 1 and 2 in a windrow mode;
Fig. 4A is a side cutaway view of the residue handling system of Figs. 1-3 in a chopping mode;
Fig. 4B is a side cutaway view of another embodiment of the residue handling system of Figs. 1-3 in a chopping mode;
Fig. 5 is a closer side view, particularly of the residue chopper of the residue handling system of Figs 1-4;
Fig. 6 is an even closer perspective view showing details of the chopper blades and part of the chopper wall, also illustrating that the residue chopper is operable in different directions;
Fig. 7 is a side cutaway view of another embodiment of the present invention, used in the agricultural harvester of Fig. 1, having a deflector pivotally arranged before the door, with a horizontally arranged spreader;
Fig. 8 is another view of the deflector of Fig. 7 in an alternate position;
Fig. 9 is a side cutaway view of yet another embodiment of the present invention, used in the agricultural harvester of Fig. 1, having a deflector pivotally coupled to the door;
Fig. 10 is another view of the deflector of Fig. 9 in an alternate position;
Fig. 11 is a side cutaway view of still yet another embodiment of the present invention, used in the agricultural harvester of Fig. 1, having a deflector pivotally coupled to a portion of the chopper housing; and
Fig. 12 is another view of the deflector of Fig. 11 in an alternate position;

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

The terms "grain", "straw" and "tailings" are used principally throughout this specification for convenience but it is to be understood that these terms are not intended to be limiting. Thus "grain" refers to that part of the crop material that is threshed and separated from the discardable part of the crop material, which is referred to as non-grain crop material, MOG or straw. Incompletely threshed crop material is referred to as "tailings". Also the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-and-aft direction of the agricultural harvester and are equally not to be construed as limiting.

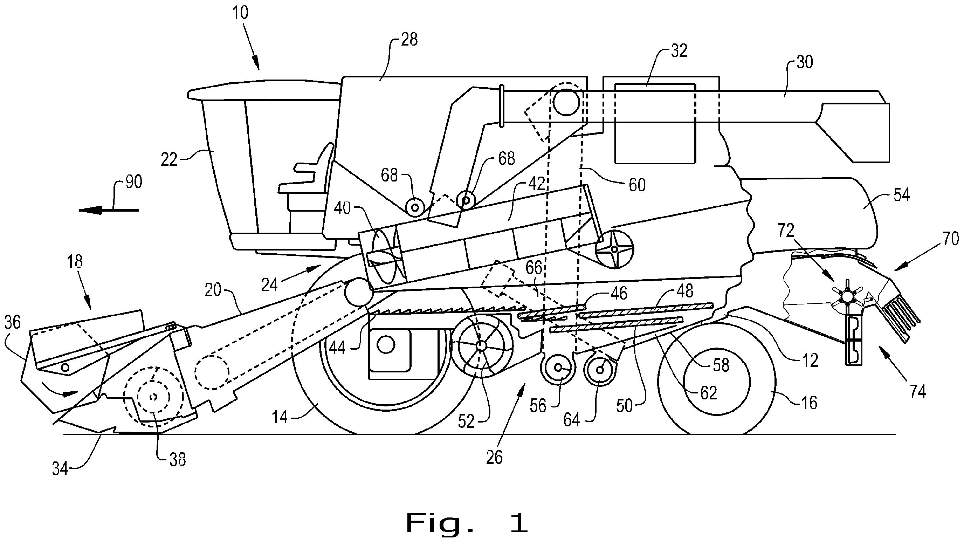

Referring now to the drawings, and more particularly to Fig. 1, there is shown an agricultural harvester in the form of a combine 10, which generally includes a chassis 12, ground engaging wheels 14 and 16, a header 18, a feeder housing 20, an operator cab 22, a threshing and separating system 24, a cleaning system 26, a grain tank 28, and an unloading conveyance 30. Unloading conveyor 30 is illustrated as an unloading auger, but can also be configured as a belt conveyor, chain elevator, etc.

The front wheels 14 are larger flotation type wheels, and rear wheels 16 are smaller steerable wheels. Motive force is selectively applied to the front wheels 14 through a power plant in the form of a diesel engine 32 and a transmission (not shown). Although the combine 10 is shown as including wheels, is also to be understood that the combine 10 may include tracks, such as full tracks or half-tracks.

The header 18 is mounted to the front of the combine 10 and includes a cutter bar 34 for severing crops from a field during forward motion of combine 10. A rotatable reel 36 feeds the crop into the header 18, and a double auger 38 feeds the severed crop laterally inwardly from each side toward the feeder housing 20. The feeder housing 20 conveys the cut crop to threshing and the separating system 24, and is selectively vertically movable using appropriate actuators, such as hydraulic cylinders (not shown).

The threshing and separating system 24 is of the axial-flow type, and generally includes a rotor 40 at least partially enclosed by and rotatable within a corresponding perforated concave 42. The cut crops are threshed and separated by the rotation of the rotor 40 within the concave 42, and larger elements, such as stalks, leaves and the like are discharged from the rear of the combine 10. Smaller elements of crop material including grain and non-grain crop material, including particles lighter than grain, such as chaff, dust and straw, are discharged through perforations of the concave 42.

Grain that has been separated by the threshing and separating assembly 24 falls onto a grain pan 44 and is conveyed toward the cleaning system 26. The cleaning system 26 may include an optional pre-cleaning sieve 46, an upper sieve 48 (also known as a chaffer sieve), a lower sieve 50 (also known as a cleaning sieve), and a cleaning fan 52. Grain on the sieves 46, 48 and 50 is subjected to a cleaning action by the fan 52, which provides an airflow through the sieves, to remove chaff and other impurities such as dust from the grain by making this material airborne for discharge from the straw hood 54 of the combine 10. The grain pan 44 and the pre-cleaning sieve 46 oscillate in a fore-to-aft manner to transport the grain and finer non-grain crop material to the upper surface of the upper sieve 48. The upper sieve 48 and the lower sieve 50 are vertically arranged relative to each other, and likewise oscillate in a fore-to-aft manner to spread the grain across sieves 48, 50, while permitting the passage of cleaned grain by gravity through the openings of sieves 48, 50.

Clean grain falls to a clean grain auger 56 positioned crosswise below and in front of the lower sieve 50. The clean grain auger 56 receives clean grain from each sieve 48, 50 and from bottom pan 58 of the cleaning system 26. The clean grain auger 56 conveys the clean grain laterally to a generally vertically arranged grain elevator 60 for transport to the grain tank 28. Tailings from the cleaning system 26 fall to a tailings auger trough 62. The tailings are transported via tailings auger 64 and the return auger 66 to the upstream end of the cleaning system 26 for repeated cleaning action. The cross augers 68 at the bottom of the grain tank 28 convey the clean grain within the grain tank 28 to the unloading auger 30 for discharge from the combine 10.

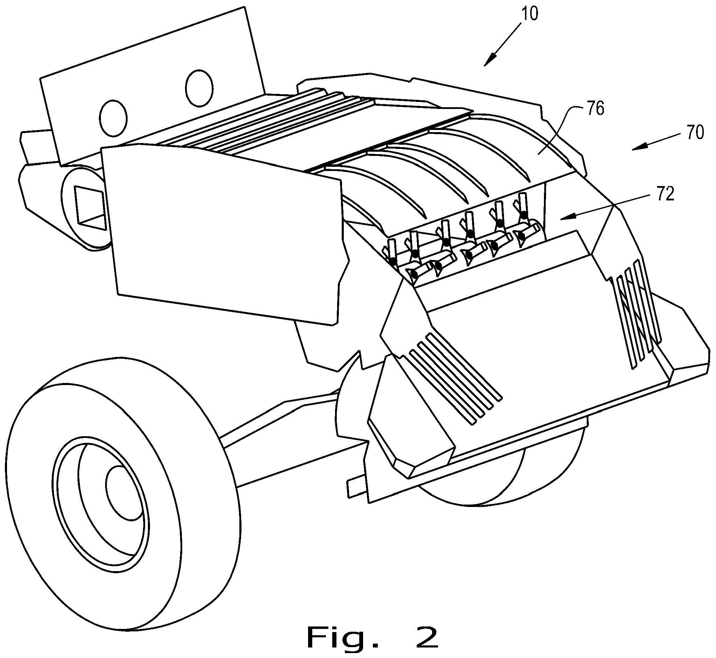

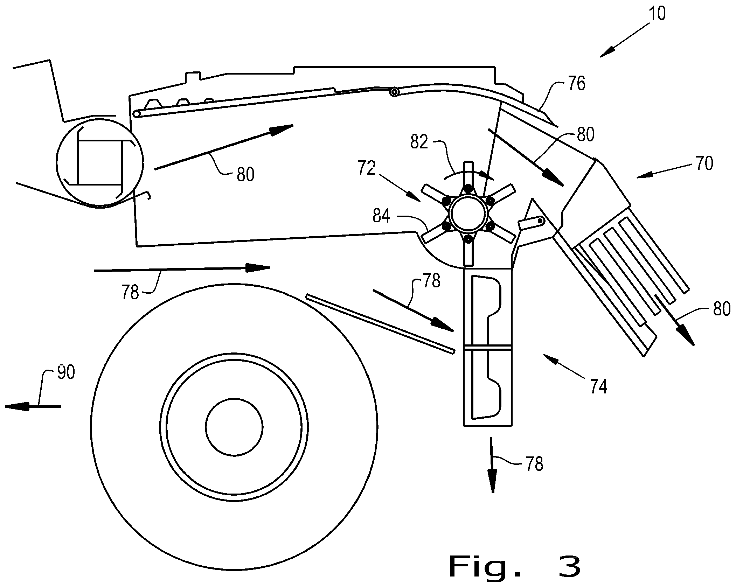

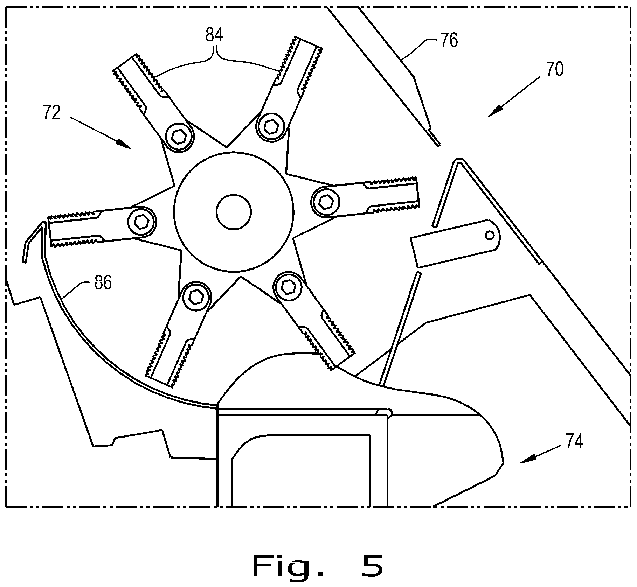

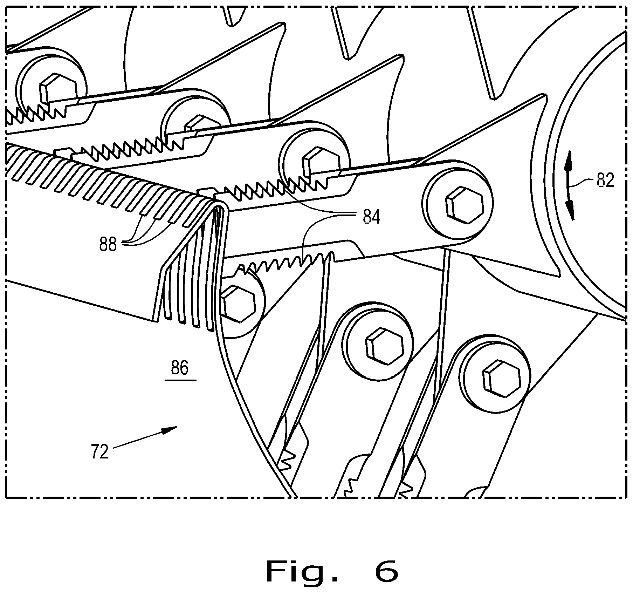

Now, additionally referring to Figs. 2-6, according to an aspect of the present invention, a residue handling system 70 is integrated in the rear of harvester 10. More specifically a straw hood 54 mounted residue chopper 72 is located above a vertically oriented straw and chaff spreader 74. The residue spreader 74 receives two streams of crop residue when in a chopping mode. One stream from the straw chopper 72 and a second stream from the cleaning system 26. The residue spreader 74 discharges the non-grain crop material or residue across the harvested width behind harvester 10. A mode selection door 76 is located above the residue chopper 72 with a transverse axis and pivots between two positions, a windrow mode and a chopping mode, such that the first stream 80 of crop is either diverted to the residue chopper 72 (chopping mode) or over the residue chopper 72 to form a windrow (windrow mode). The residue spreader 74 may pivot about a transverse axis between an operating position and a storage or service position. A windrow chute of known art is provided that may or may not be attached to the spreader 74 and rotates with the spreader 74.

The present invention includes some existing systems that are reorganized and provided with new capabilities. In contrast to the prior art, the hood mount chopper 72 is located inside the straw hood 54 and rotates in a clockwise direction when viewed from the left-hand side of the machine. The discharge from the chopper 72 is mostly downward into a vertically disposed spreader 74. The spreader 74 may be of known construction such as those used in the Case IH combine and this disclosure incorporates all of the known concepts of that assembly.

Further, the present inventive concept improves upon the traditional design because the chopper 72 is moved further forward, closer to the discharge beater so that the distance to propel crop is reduced, thereby eliminating the need for crop transport assistive devices.

Material discharged from the discharge beater passes to the windrow selection door 76 that may divert the crop residue to either 1) the chopper 72 for chopping, or 2) over the chopper 72 to form a windrow. When the door 76 is closed, the material passes to the chopper 72 and the length of travel of the residue flow 80 is substantially reduced by the impact or shear cutting principles of chopper blades 84 with the aid of counter knives if desired. The residue material then passes downward to the spreader 74, which has two counter-rotating impellers (although only one is shown in profile) and a crop divider between the impellers. The divider may be placed substantially close to the swept diameter of the chopper 72 to ensure the crop residue is divided and diverted to each impeller respectively. The spreader 74 may have adjustable deflectors that are selectively adjusted to alter the velocity imparted to the residue material to thereby control the distribution of the chopped residue on to the field. If the windrow selection door 76 is open (windrow mode), then the discharged straw or crop residue bypasses the chopper 72 and is discharged out of the machine onto a hood or chute that guides the residue material to form a windrow behind the machine 10. The spreader 74 receives a second stream of crop residue in the form of chaff from the cleaning shoe in a chaff flow 78 and incorporates this chaff residue in the spreader 74 with the chopped straw, so that all of the material, if the door 76 is closed, is spread behind the machine 10 in a uniform distribution. If the windrow door 76 is open, then the spreader 74 will spread only the chaff from the chaff flow 78.

The chopper 72 includes a front wrapper wall 86 to control any forward air movement, and the front wrapper around the chopper may partially enclose the chopper 72. Further, the wrapper wall 86 is slotted 88 at the upper and front end such that the chopper blades 84 will pass through the slots 88 so that crop residue material discharged from the beater will not accumulate on the top of the wrapper 86 and cause a blockage to form. The wrapper 86 may enclose the chopper 72 from 90° to 180° starting at bottom dead center.

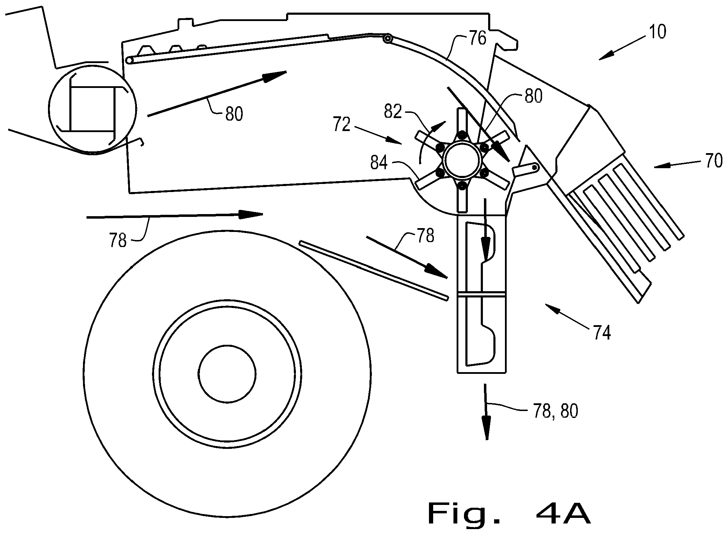

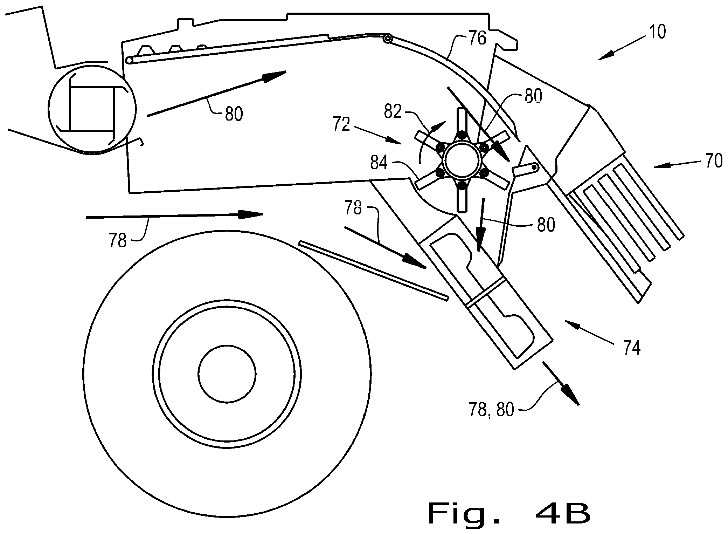

The spreader 74 may pivot about a transvers axis between a substantially vertical position (+/- 20°) and a rearward storage or service position. The spreader 74 may be driven by either a fluid power or mechanical drive system. The spreader 74 pivot axis is concentric to the chopper 72 axis, or the spreader 74 pivot axis may be rearward of the chopper 72 axis. The spreader 74 pivot axis can be concentric with the windrow hood pivot axis. The spreader 74 is biased to move to the storage position by a spring, gas strut, actuator or the like. The windrow hood or chute may or may not be attached to the spreader 74. If it is attached to the spreader 74, then it will rotate with the spreader 74. If it is not attached to the spreader 74, then the rotation of the spreader 74 may be limited by the position of the windrow hood. A corresponding latch position may be provided to hold the position of the hood and/or the spreader 74. As can be seen in Fig. 4A residue stream 80 is directed through chopper 72 and the chopped material enters an end of spreader 74, while residue stream 78 enters a back face of spreader 74 with the streams being mixed and combined into a single flows exiting as shown. In another embodiment of residue handling system 70, as shown in Fig. 4B, residue stream 80, after being chopped in chopper 72 proceeds into a face of spreader 74, while residue stream 78 enters an opposite face of spreader 74 and the mixed/combined residue streams exit as shown. Spreader 74 may be positioned at approximately 25° from vertical.

The chopper 72 may be driven by either a fluid power system or a mechanical drive system. The chopper 72 has 2 speeds: a low speed = 800 - 1200 RPM and a high speed = 2800 - 3500 RPM. The chopper 72 may be shifted between the two speeds remotely or from the cab 22. The windrow door 76 may be pivoted by a mechanical linkage, fluid power system, or an electric actuator. The pivotal movement may be accomplished by the operator from either the cab 22, a remote location on the machine 10, or within proximity of the door 76 by way of a linkage.

The residue chopper 72 is configured to operate at a tangential velocity 82 approximately equal to the velocity of the residue flow 80 passing above the residue chopper 72, in order to accommodate the material contained in the residue flow 80 or the velocity may vary therefrom to some degree to enhance the residue flow 80. The door 76 is positioned generally above the residue chopper 72, and the door 76 is pivotally movable between the raised windrow mode and the lowered chopping mode. As discussed above the residue chopper 72 has various operating speeds, the low speed may be used when the door 76 is in the windrow mode and the high speed is used when the door 76 is in the chopping mode.

The chaff flow 78 goes to the residue spreader 74 regardless of the position of the door 76. The residue flow 80 is directed to the residue chopper 72 and then to the residue spreader 74 when the door 76 is in the chopping mode. When the door 76 is in the raised windrow mode the residue flow 80 is directed generally above and toward the residue chopper 72. The residue chopper 72 has a direction of rotation 82 in which the bottom of the residue chopper 72 has a circumferential direction that is generally the same as the direction of travel 90 of the harvester 10. It is also contemplated that the blades 84 of the residue chopper 72 may run in an opposite direction when in the chopping mode.

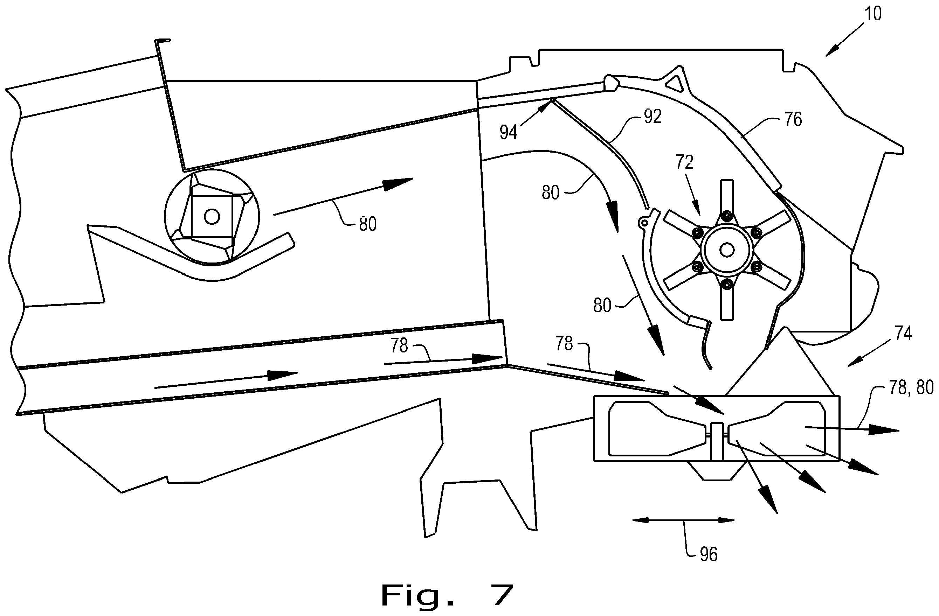

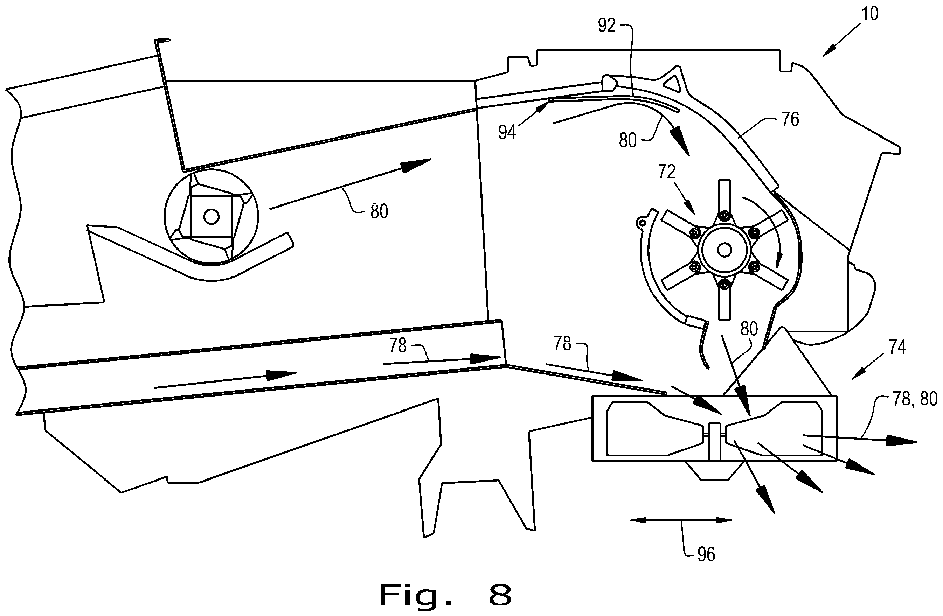

Now additionally referring to Figs. 7 and 8 there is illustrated another embodiment of the present invention, where the spreader 74 is installed generally horizontally plus or minus approximately 15° and is directly beneath the chopper 72. Upstream in the residue flow 80 there is a deflector 92 having a pivotal connection 94 that is positioned ahead of the door 76. The deflector 92 is positioned in a bypass configuration as shown in Fig. 7, where the residue flow 80 is deflected so as to bypass the chopper 72 and enter the spreader 74 along with the chaff flow 78 for distribution upon the field. When the deflector 92 is in the bypass position the chopper 72 may not be driven.

In Fig. 8 the deflector 92 is pivoted upwardly about the pivotal connection 94 and may be against and generally parallel to the door 76. In this position the deflector 92 is in a non-bypass configuration allowing the residue flow 80 to enter the top of the chopper 72 and the chopped residue then proceeds to the spreader 74 where it is joined with the chaff flow 78 and is distributed to the ground by the action of the spreader 74. Of course the position of the door 76, as discussed above, will also determine the path of the residue flow 80 when the deflector 92 is in the non-bypass position.

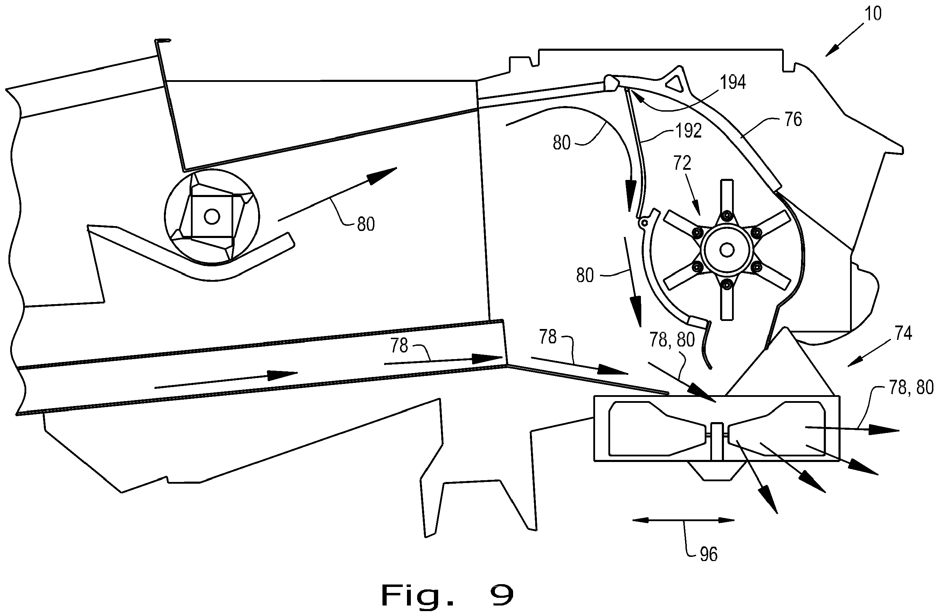

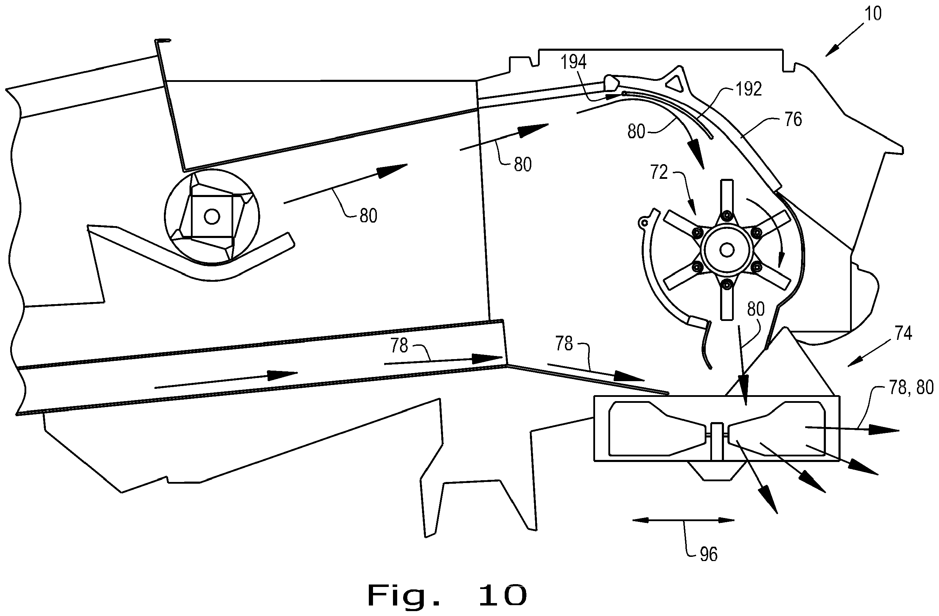

Now additionally referring to Figs. 9 and 10 there is illustrated yet another embodiment of the present invention, where, like the previous embodiment, the spreader 74 is installed generally horizontally plus or minus approximately 15° and is directly beneath the chopper 72. Upstream in the residue flow 80 there is a deflector 192 having a pivotal connection 194 that is positioned on the door 76 or may be co-pivotal with the door 76. The deflector 192 is positioned in a bypass configuration as shown in Fig. 9, where the residue flow 80 is deflected so as to bypass the chopper 72 and enter the spreader 74 along with the chaff flow 78 for distribution upon the field.

In Fig. 10 the deflector 192 is pivoted upwardly about the pivotal connection 194 and may be against and generally parallel to the door 76. In this position the deflector 192 is in a non-bypass configuration allowing the residue flow 80 to enter the top of the chopper 72 and the chopped residue then proceeds to the spreader 74 where it is joined with the chaff flow 78 and is distributed to the ground by the action of the spreader 74. Of course the position of the door 76, as discussed above, will also determine the path of the residue flow 80 when the deflector 192 is in the non-bypass position.

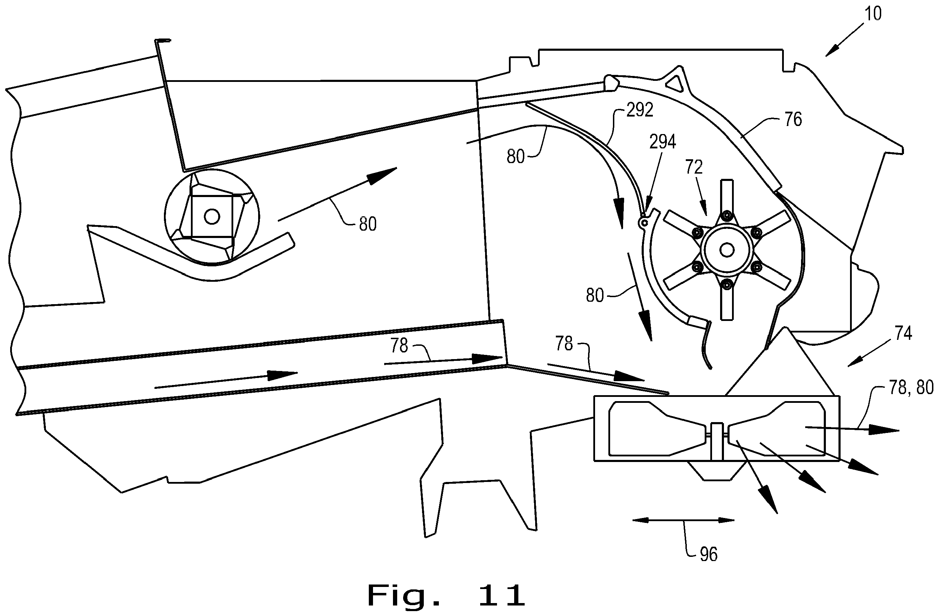

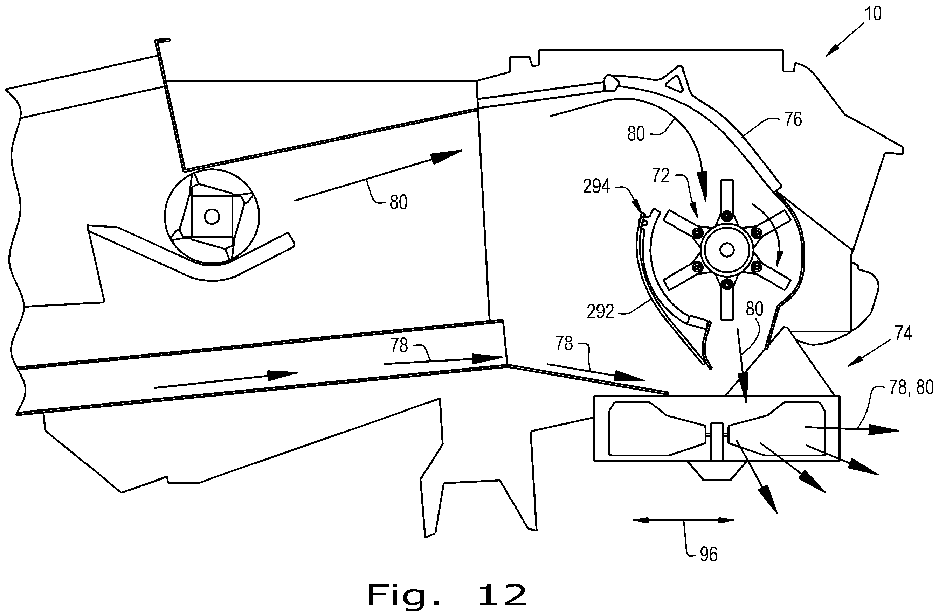

Now additionally referring to Figs. 11 and 12 there is illustrated still yet another embodiment of the present invention, where again the spreader 74 is installed generally horizontally plus or minus approximately 15° and is directly beneath the chopper 72. Upstream in the residue flow 80 there is a deflector 292 having a pivotal connection 294 that coupled to the housing of the chopper 72. The deflector 292 is positioned in a bypass configuration as shown in Fig. 11, where the residue flow 80 is deflected so as to bypass the chopper 72 and enter the spreader 74 along with the chaff flow 78 for distribution upon the field.

In Fig. 12 the deflector 292 is pivoted downwardly about the pivotal connection 294 and may be against and generally parallel to the housing of the chopper 72. In this position the deflector 292 is in a non-bypass configuration allowing the residue flow 80 to enter the top of the chopper 72 and the chopped residue then proceeds to the spreader 74 where it is joined with the chaff flow 78 and is distributed to the ground by the action of the spreader 74. Of course the position of the door 76, as discussed above, will also determine the path of the residue flow 80 when the deflector 292 is in the non-bypass position.

The spreader 74 may be pivoted to change the angle at which the residue flow 80 enters the spreader 74. Also, the spreader 74 may be movable in a direction 96, depending upon the mode in which the residue handling system 70 is in, to enhance the entry of the residue flow 80 into the spreader 74 and the ultimate distribution of the residue.

While this invention has been described with respect to at least one embodiment, the present invention can be further modified within the scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. An agricultural harvester (10), comprising:
a chassis (12);
a separating system (24) carried by the chassis (12), the separating system (24) being arranged for receiving a flow of crop material and producing a chaff flow (78) and a residue flow (80); and
a residue handling system (70) carried by the chassis for receiving the chaff flow (78) and the residue flow (80) from the separating system (24), the residue handling system (70) including a residue chopper (72) and a residue spreader (74), whereby the residue chopper (72) is arranged for chopping and/or moving the residue flow (80) and being operationally positioned immediately above the residue spreader (74), the residue spreader (74) being oriented to receive the chaff flow (78) and the residue flow (80) chopped by the residue chopper (72); and
**characterized in that** the residue chopper (72) includes a chopper front wall (86) having slots (88) therein and blades (84), at least some of the slots (88) accommodating a travel of at least one of the blades (84) therethrough.

2. The agricultural harvester (10) of claim 1, wherein the residue chopper (72) is configured to operate at a tangential velocity approximately equal to a velocity of the flow of the residue (80) passing above the residue chopper (72).

3. The agricultural harvester (10) of claims 1 or 2, wherein the residue handling system (70) further includes a door (76) positioned generally above the residue chopper (72), the door (76) being configured to divert the residue flow (80) to the residue chopper (72) when in a chopping mode and to not divert the residue flow (80) when in a windrow mode.

4. The agricultural harvester (10) of claim 3, wherein the door (76) is pivotally movable between the windrow mode and the chopping mode.

5. The agricultural harvester (10) of claim 4, wherein the residue chopper (72) has a first operating speed when the door (76) is in the windrow mode and a second operating speed when the door (76) is in the chopping mode, the second operating speed being greater than the first operating speed.

6. The agricultural harvester (10) of claim 5, wherein the first operating speed is in a range of approximately 800 to 1,200 RPM, the second operating speed being in a range of approximately 2,800 to 3,500 RPM.

7. The agricultural harvester (10) of claim 4, wherein the residue handling system (70) is configured to direct the chaff flow (78) to the residue spreader (74) whether the door (76) is in the windrow mode or the chopping mode.

8. The agricultural harvester (10) of claims 4-7, wherein the residue handling system (70) is configured to direct the residue flow (80) from the separating system (24) generally above and toward the residue chopper (72) when the door (76) is in the windrow mode.

9. The agricultural harvester (10) of claims 1-8, wherein the agricultural harvester (10) has a harvesting direction of travel (90), the residue chopper (72) having a direction of rotation (82) in which the bottom of the residue chopper (72) has a circumferential direction that is generally the same as the direction of travel (90).

10. The agricultural harvester (10) of claims 1-9, wherein the residue handling system (70) is configured so that the residue flow (80) from the residue chopper (72) enters a first face of the residue spreader (74) and the chaff flow (78) enters an opposite face of the residue spreader (74).

11. The agricultural harvester (10) of claims 1-10, wherein the residue chopper (72) is configured to have a direction of rotation (82) which is selectively reversible.

12. The agricultural harvester (10) of claims 1-11, further comprising a deflector (92, 192, 292) pivotally coupled to the agricultural harvester (10), the deflector (92, 192, 292) being movable between a bypass position and a non-bypass position, the bypass position causing the residue flow (80) to bypass the residue chopper (72) and proceed directly to the residue spreader (74).

13. The agricultural harvester (10) of claim 12, wherein the residue spreader (74) is oriented in a generally horizontal direction.

## Patentansprüche

1. Landwirtschaftliche Erntemaschine (10) mit:
einem Fahrgestell (12);
einer Trennanordnung (24), die von dem Fahrgestell (12) getragen wird, wobei die Trennanordnung (24) dazu eingerichtet ist, einen Erntegutstrom aufzunehmen und einen Spreustrom (78) und einen Rückstandsstrom (80) zu erzeugen; und
einer Rückstandsbearbeitungsanordnung (70) zum Aufnehmen des Spreustroms (78) und des Rückstandsstroms (80) von der Trennanordnung (24), die von dem Fahrgestell getragen wird, wobei die Rückstandsbearbeitungsanordnung (70) einen Rückstandshäcksler (72) und einen Rückstandsausstreuer (74) umfasst, wobei der Rückstandshäcksler (72) zum Häckseln und/oder Bewegen des Rückstandsstroms (80) eingerichtet ist und betriebsbedingt unmittelbar über dem Rückstandsausstreuer (74) angeordnet ist, wobei der Rückstandsausstreuer (74) derart ausgerichtet ist, dass er den Spreustrom (78) und den Rückstandsstrom (80), der von dem Rückstandshäcksler (72) gehäckselt wurde, empfängt; und
**dadurch gekennzeichnet, dass**
der Rückstandshäcksler (72) eine Häckslervorderwand (86), die Schlitze (88) darin aufweist, und Schneiden (84) umfasst, wobei zumindest einige der Schlitze (88) der Bewegung zumindest einer Schneide (84) durch diese Platz bieten.

2. Landwirtschaftliche Erntemaschine (10) nach Anspruch 1, wobei der Rückstandshäcksler (72) dazu eingerichtet ist, mit einer Tangentialgeschwindigkeit zu arbeiten, die in etwa gleich der Geschwindigkeit des Rückstandsstroms (80) ist, der über dem Rückstandshäcksler (72) entlang strömt.

3. Landwirtschaftliche Erntemaschine (10) nach Anspruch 1 oder 2, wobei die Rückstandsbearbeitungsanordnung (70) weiterhin eine Klappe (76) umfasst, die im Wesentlichen oberhalb des Rückstandshäckslers (72) angeordnet ist, wobei die Klappe (76) dazu eingerichtet ist, den Rückstandsstrom (80) zum Rückstandshäcksler (72) umzuleiten, wenn sie sich in einem Häckselmodus befindet, und den Rückstandsstrom (80) nicht umzuleiten, wenn sie sich in einem Schwadmodus befindet.

4. Landwirtschaftliche Erntemaschine (10) nach Anspruch 3, wobei die Klappe (76) zwischen dem Schwadmodus und dem Häckselmodus schwenkbeweglich ist.

5. Landwirtschaftliche Erntemaschine (10) nach Anspruch 4, wobei der Rückstandshäcksler (72) eine erste Betriebsgeschwindigkeit aufweist, wenn sich die Klappe (76) im Schwadmodus befindet, und eine zweite Betriebsgeschwindigkeit aufweist, wenn sich die Klappe (76) im Häckselmodus befindet, wobei die zweite Betriebsgeschwindigkeit größer als die erste Betriebsgeschwindigkeit ist.

6. Landwirtschaftliche Erntemaschine (10) nach Anspruch 5, wobei die erste Betriebsgeschwindigkeit zwischen etwa 800 bis 1.200 Umdrehungen pro Minute beträgt und die zweite Betriebsgeschwindigkeit zwischen etwa 2.800 bis 3.500 Umdrehungen pro Minute beträgt.

7. Landwirtschaftliche Erntemaschine (10) nach Anspruch 4, wobei die Rückstandsbearbeitungsanordnung (70) dazu eingerichtet ist, den Spreustrom (78) zum Rückstandsausstreuer (74) zu lenken, wenn sich die Klappe (76) im Schwadmodus oder im Häckselmodus befindet.

8. Landwirtschaftliche Erntemaschine (10) nach den Ansprüchen 4 bis 7, wobei die Rückstandsbearbeitungsanordnung (70) dazu eingerichtet ist, den Rückstandsstrom (80) von der Trennanordnung (24) im Wesentlichen über den und in Richtung des Rückstandshäckslers (72) zu lenken, wenn sich die Klappe (76) im Schwadmodus befindet.

9. Landwirtschaftliche Erntemaschine (10) nach den Ansprüchen 1 bis 8, wobei die landwirtschaftliche Erntemaschine (10) eine Erntebewegungsrichtung (90) aufweist, wobei der Rückstandshäcksler (72) eine Drehrichtung (82) aufweist, die am Boden des Rückstandshäckslers (72) eine Umfangsrichtung aufweist, die im Wesentlichen gleich der Bewegungsrichtung (90) ist.

10. Landwirtschaftliche Erntemaschine (10) nach den Ansprüchen 1 bis 9, wobei die Rückstandsbearbeitungsanordnung (70) derart eingerichtet ist, dass der Rückstandsstrom (80) von dem Rückstandshäcksler (72) in eine erste Oberfläche des Rückstandsausstreuers (74) eintritt und der Spreustrom (78) in eine gegenüberliegende Oberfläche des Rückstandsausstreuers (74) eintritt.

11. Landwirtschaftliche Erntemaschine (10) nach den Ansprüchen 1 bis 10, wobei der Rückstandshäcksler (72) derart eingerichtet ist, dass er eine Drehrichtung (82) aufzuweist, die wahlweise umkehrbar ist.

12. Landwirtschaftliche Erntemaschine (10) nach den Ansprüchen 1 bis 11, weiterhin mit einem Umlenkelement (92, 192, 292), das schwenkbar mit der landwirtschaftlichen Erntemaschine (10) verbunden ist, wobei das Umlenkelement (92, 192, 292) zwischen einer Bypass-Stellung und einer Nicht-Bypass-Stellung beweglich ist, wobei die Bypass-Stellung bewirkt, dass der Rückstandsstrom (80) den Rückstandshäcksler (72) umgeht und direkt zum Rückstandsausstreuer (74) fortführt.

13. Landwirtschaftliche Erntemaschine (10) nach Anspruch 12, wobei der Rückstandsausstreuer (74) in einer im Wesentlichen horizontalen Richtung ausgerichtet ist.

## Revendications

1. Moissonneuse agricole (10), comprenant :
un châssis (12),
un système de séparation (24) porté par le châssis (12), le système de séparation (24) étant agencé pour recevoir un flux de matériau de récolte et produire un flux de paille (78) et un flux de résidus (80), et
un système de manipulation de résidus (70) porté par le châssis pour recevoir le flux de paille (78) et le flux de résidus (80) du système de séparation (24), le système de manipulation de résidus (70) incluant un hacheur de résidus (72) et un épandeur de résidus (74), selon lequel le hacheur de résidus (72) est agencé pour hacher et/ou pour déplacer le flux de résidus (80) et est positionné fonctionnellement immédiatement au-dessus de l'épandeur de résidus (74), l'épandeur de résidus (74) étant orienté pour recevoir le flux de paille (78) et le flux de résidus (80) haché par le hacheur de résidus (72), et
**caractérisée en ce que** le hacheur de résidus (72) inclut une paroi avant de hacheur (86) comportant des fentes (88) à l'intérieur de celle-ci et des lames (84), au moins certaines des fentes (88) étant adaptées pour le déplacement d'au moins une des lames (84) à travers celles-ci.

2. Moissonneuse agricole (10) selon la revendication 1, dans laquelle le hacheur de résidus (72) est conçu pour fonctionner à une vitesse tangentielle approximativement égale à la vitesse d'un flux de résidus (80) passant au-dessus du hacheur de résidus (72).

3. Moissonneuse agricole (10) selon les revendications 1 ou 2, dans laquelle le système de manipulation de résidus (70) comprend en outre une porte (76) positionnée généralement au-dessus du hacheur de résidus (72), la porte (76) étant conçue pour détourner le flux de résidus (80) vers le hacheur de résidus (72) dans un mode de hachage et pour ne pas détourner le flux de résidus (80) dans un mode d'andain.

4. Moissonneuse agricole (10) selon la revendication 3, dans laquelle la porte (76) est mobile de façon pivotante entre le mode d'andain et le mode de hachage.

5. Moissonneuse agricole (10) selon la revendication 4, dans laquelle le hacheur de résidus (72) a une première vitesse de fonctionnement lorsque la porte (76) est dans le mode d'andain et une seconde vitesse de fonctionnement lorsque la porte (76) est dans le mode de hachage, la seconde vitesse de fonctionnement étant supérieure à la première vitesse de fonctionnement.

6. Moissonneuse agricole (10) selon la revendication 5, dans laquelle la première vitesse de fonctionnement est comprise entre environ 800 et 1.200 t/min., la seconde vitesse de fonctionnement étant comprise entre environ 2.800 et 30.500 t/min.

7. Moissonneuse agricole (10) selon la revendication 4, dans laquelle le système de manipulation de résidus (70) est conçu pour diriger le flux de paille (78) vers l'épandeur de résidus (74), que la porte (76) soit dans le mode d'andain ou dans le mode de hachage.

8. Moissonneuse agricole (10) selon les revendications 4-7, dans laquelle le système de manipulation de résidus (70) est conçu pour diriger le flux de résidus (80) depuis le système de séparation (24) généralement au-dessus et vers le hacheur de résidus (72) lorsque la porte (76) est dans le mode d'andain.

9. Moissonneuse agricole (10) selon les revendications 1-8, dans laquelle la moissonneuse agricole (10) a une direction de déplacement en récolte (90), le hacheur de résidus (72) ayant un sens de rotation (82) dans lequel le fond du hacheur de résidus (72) a une direction circonférentielle qui est généralement similaire à la direction de déplacement (90).

10. Moissonneuse agricole (10) selon les revendications 1-9, dans laquelle le système de manipulation de résidus (70) est conçu de telle sorte que le flux de résidus (80) à partir du hacheur de résidus (72) pénètre dans un premier côté de l'épandeur de résidus (74) et le flux de paille (78) pénètre dans un côté opposé de l'épandeur de résidus (74).

11. Moissonneuse agricole (10) selon les revendications 1-10, dans laquelle le hacheur de résidus (72) est configuré to avoir un sens de rotation (82) qui est sélectivement réversible.

12. Moissonneuse agricole (10) selon les revendications 1-11, comprenant en plus un déflecteur (92, 192, 292) couplé de façon pivotante à la moissonneuse agricole (10), le déflecteur (92, 192, 292) étant mobile entre une position de dérivation et une position de non dérivation, la position de dérivation faisant détourner le flux de résidus (80) du hacheur de résidus (72) pour le faire passer directement vers l'épandeur de résidus (74).

13. Moissonneuse agricole (10) selon la revendication 12, dans laquelle l'épandeur de résidus (74) est orienté dans une direction généralement horizontale.
